# EUROPEAN PATENT SPECIFICATION

(11) **EP 0 408 264 B1**
(45) Date of publication and mention of the grant of the patent: **19.10.1994**
(21) Application number: 90307410.2
(22) Date of filing: 06.07.1990
(51) Int. Cl.: B23Q 1/12, B23C 1/12

(54) **A structural improvement for main shaft of tooling machine**
Konstruktive Verbesserung des Hauptwellenantriebs von Werkzeugmaschinen
Modification constructive de l'arbre principal de machines-outils

(30) Priority: 11.07.1989 US 378366
(43) Date of publication of application: 16.01.1991
(73) Proprietor: Yang, Tai-Her, Taipei (TW)
(72) Inventor: Yang, Tai-Her, Taipei (TW)
(74) Representative: Arthur, Bryan Edward

(56) References cited:
- EP-A- 0 068 952
- EP-A- 0 210 555
- EP-A- 0 234 272
- EP-A- 0 287 748
- DE-A- 3 433 252
- GB-A- 2 167 327

## Description

The present invention relates to a structural improvement in main shafts of ram-type tooling machines, mainly based upon two coupling interfaces inclined at 45° to each other which permit 360° rotary positioning and allowing forward, backward, leftward, rightward, upward, downward or universal adjustment and positioning. It also allows the use of a horizontal cutter bar mounted between a shaft hole in the machine body, and the ram. This allows inward (backward) adjustment. The machine therefore allows dual operations of vertical and horizontal functioning.

EP 0,234,272 discloses a double-rotatable universal head for machine tools. It comprises a head and a head carrier. The head carrier is attached to a machine body so that the head carrier is rotatable around a horizontal axis. The head is attached to the head carrier, but the interface between them is inclined at 45° from the interface between the machine body and the head carrier. The head is rotatable on the head carrier at the interface between the head and the head carrier. The spindle is mounted in the head inclined at 45° to the plane of the interface. This permits only five direction adjustment.

### SUMMARY OF THE INVENTION

The present invention relates to an improved tooling machine comprising
a machine body 110,
a ram 101 mountable on the machine body 110 and movable back and forth for driving and adjustment, the ram including a ram coupling plane 102
an auxiliary component 103 including a first coupling plane 104 engagable with the ram coupling plane 102, the auxiliary component 103 being co-axially rotatably adjustable with respect to the engaged ram coupling plane 102 and further including a second inter-output plane 105 disposed at 45° to the first coupling plane 104.
an output component 106 having an output coupling plane 107 engagable with the inter-output plane 105, the output component being rotatable between 0-360° about an axis perpendicular to the engaged output coupling plane 107 and inter-output plane 105 for adjustment/locking
an output shaft 108 disposed within the output component 106,
characterised in that the coupling plane 102 of the ram 101 is inclined downwardly at 45° from vertical, permitting the second inter-output plane 105) to be adjustable and positionable facing forwards, downwards or at various angles therebetween, in that the output shaft 108 lies parallel to the output coupling plane (107) and is adjustable through 0-360°, in that the output shaft (108) includes an output shaft hole (109) for locking/locating cutting tools such as milling anvil, grinding, boring and vertical cutters, in that the output shaft (108) is drivably positionable forwards, backwards, to the left, to the right, upwards, downwards and positions in between, in that a shaft support hole 111 is disposed in the machine body 110 beneath the ram (101) for supporting one end of a horizontal cutter bar 112, the other end of the cutter bar 112 locatable in and driven by the output shaft 108 of the inward facing output component 106, and in that the cutter bar 112 is additionally supportable by support bearings 114 wherein the cutter bar (112) is adjustable along support bearings (113) located below the ram (101).

### BRIEF DESCRIPTION OF THE DRAWINGS

Fig. 1 is a diagrammatic view of a main shaft structure having six-plane adjustment according to the present invention.

Figs. 1A - 1F are practical examples showing the main shaft as shown in Fig. 1 in various positions according to the present ivnention.

Fig. 2 is a diagrammatic view of a horizontal milling machine structure including a main shaft having six-direction adjustment and a shaft hole located within the machine body according to the present invention.

Fig. 3 is a perspective view of a practical example of the structure as shown in Fig. 2 according to the present invention.

Fig. 4 is a partially sectional view of a transmission shaft passing through the centre of the 45° coupling plane according to the embodiment of Fig. 1.

Fig. 5 is a sectional view of a transmission shaft passing through the centre of the 45° coupling plane according to the embodiment of a conventional vertical-horizontal adjustable main shaft.

### DETAILED DESCRIPTION OF THE INVENTION

Conventional ram-type milling (tooling) machines usually have a ram which is able to move longitudinally forwards and backwards. They also include machines which have a universal main shaft head that is capable of selective 0-360° rotation and positioning. These machines also include another auxiliary component, one end of which, a first coupling plane, is couplable with the base. This permits 0-360° rotational adjustment between the auxiliary component and the base. The auxiliary component has a second coupling plane at 45° to the first, the second coupling plane being an inter-output plane. An output head component is couplable to the inter-output plane. It has an output main shaft, and a coupling plane referred to as an output plane. The output main shaft is inclined at 45° out of the output plane. The coupling with the interoutput plane permits selective 0-360° rotation and positioning by either mechanical or manual means. This output component carries an output shaft forwardly of the rearward coupling plane so as to permit the shaft to be moved upwards/downwards, forwards, to the left and to the right in five directions or planes whilst maintaining block-free position adjustment for cutting workpieces (Attachment A). This arrangement is useful as a common-type driving a horizontal cutter-shaft from the internal side by means of milling frame accessories affixed to a vertical main shaft (Attachment B). It is also useful as a common type where the horizontal shaft is driven from the internal end via a vertical main shaft by means of a vertical cutter head structure supported by an auxiliary support arm (Attachment C). These two arrangements have the disadvantages of less strength, more inconvenient, higher cost and great weight. Storage of accessories is also a problem in B.

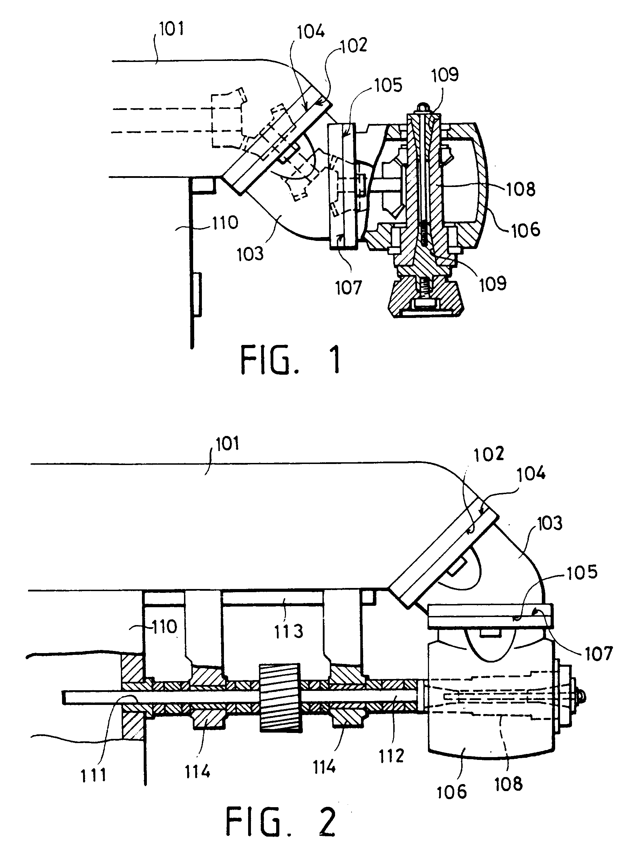

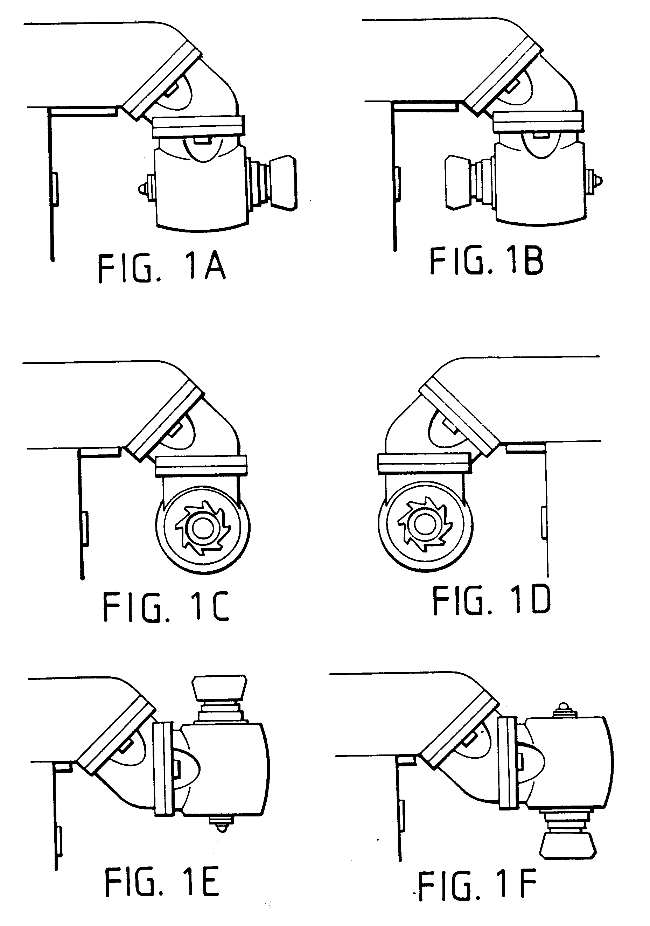

For practical reasons the output shaft often needs a sixth direction for horizontal shaft milling supported inside the output component, such as on a universal milling machine. For milling machine processing, structures B and C have many accessories or extra parts to them. These tend to get lost or damaged and are difficult to replace. The main improvement of the present invention is to disclose a machine capable of horizontal inward shaft milling thereby able to carry out processing in six different directions. The horizontal cutter shaft is supported at its inner end by a shaft hole in the machine body. This may be a through-hole or a blind hole. The main features of this machine are shown in Figure 1 and in Figures 1A - 1F. A ram-type milling machine is described by way of example only. The ram head is able to move longitudinally forwards and backwards. It has a coupling plane angled downwards from the vertical by 45°. An auxiliary component is couplable with the ram coupling plane. The auxiliary component has a first coupling plane couplable with the ram coupling plane, and a second coupling plane at 45° to the first coupling plane. An output component includes an inter-output coupling plane which is engagable with the second coupling plane of the auxiliary component. This coupling is rotatable through 360° in order to allow selectable rotation and positioning of the main shaft. The main shaft is postionable forwards, backwards, to the left, to the right, upwards and downwards or at any angle between.

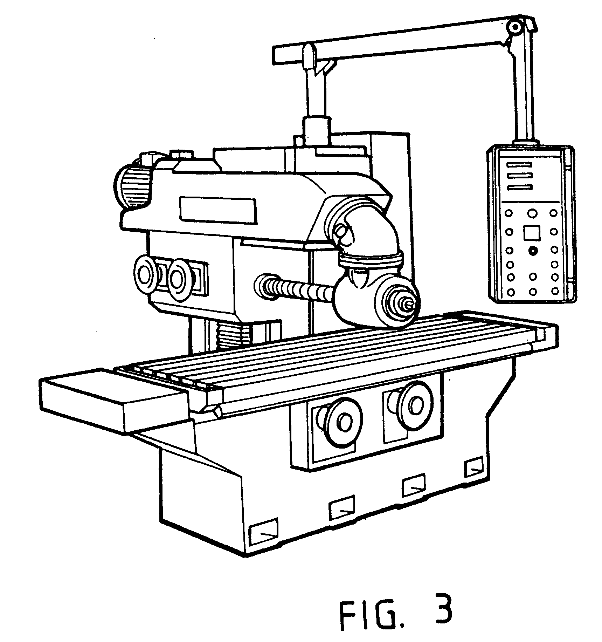

Referring now to Figures 1 and 2, in addition to the conventional drive mechanisms including mechanically and manually operated gearing and locking mechanisms, the device of the present invention includes the following features:
The ram 101 which is movable forwards and backwards for adjustment and driving during milling and has at a forward end a coupling plane 102 inclined downwards at 45° for coupling with an auxiliary component 103. The coupling permits rotation of the auxiliary component in the plane of its coupling with the ram coupling plane.

The auxiliary component 103 has a second inter-output coupling plane 105 at 45° to the first auxiliary coupling plane.

The output component 103 has an output plane 107 coupable with the inter-output coupling plane 105 of the auxiliary component 103. The coupling permits selective 0-360° rotation and positioning.

The output component 106 includes an output shaft 108 which lies in the plane of the output coupling plane, but is disposed above that plane. The output shaft 108 defines a shaft hole 109 passing therethrough. The output shaft is adapted to locate and lock in milling tools such as an anvil tool, a grinding tool, a boring tool, or a vertical cutting tool. These tools may be selectively positioned by the 0-360° rotation and positioning of the two coupling connections which are maintained at 45° relative to each other by the auxiliary component. The first coupling connection is between the ram coupling plane and the first auxiliary component coupling plane and the second coupling connection is between the second auxiliary coupling plane (or inter-output plane) and the output component coupling plane. The main shaft may be moved and positioned pointing forwards, backwards, to the left, to the right, upwards and downwards in a total of six directions. These directions are shown in Figures 1A - 1F. Other intermediate directions are also possible.

An horizontal cutter bar may be used, mounted between a machine body 110 and the ram head which is positioned so that the output shaft is directed towards the machine body 110. Various types of machine body may be used including a vertical column type or elevated type of machine body. The machine body 110 includes a through-hole or socket blind hole for locating an internal end of the horizontal cutter bar. The external end of the horizontal cutter bar is supported by the output main shaft 108 which is supported by the ram 101. The underside of the ram 101 includes guide rails 113. Support bearings 114 are attached to the guide rails 113 and support the horizontal cutter bar. The support bearings 114 are adjustable along the length of the guide rail 113. The horizontal cutter bar is driven by the output shaft 108.

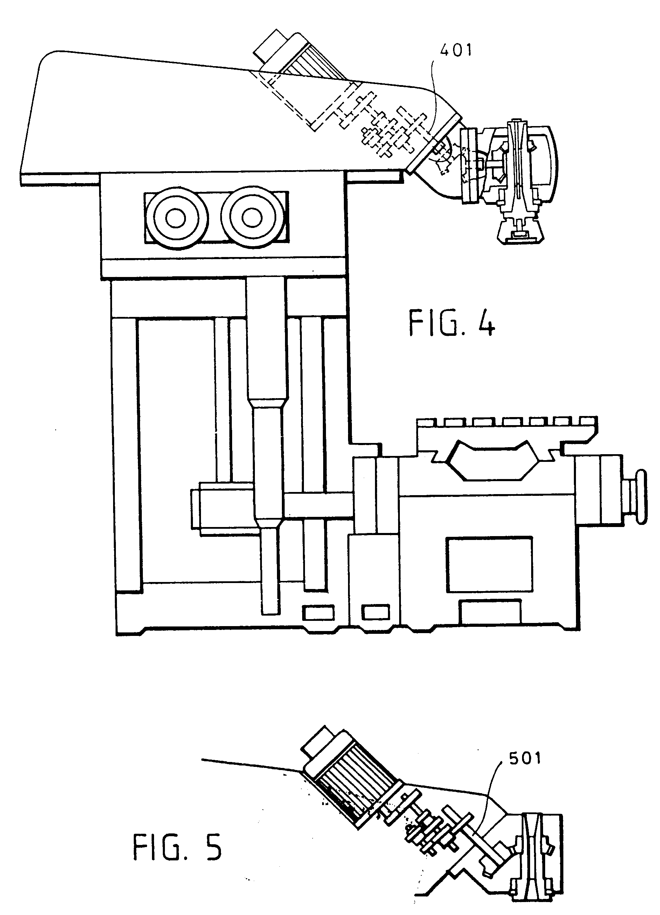

This embodiment comprises
(1) a universal main shaft head for adjustment and positioning in 6 directions and for positioning it so that it faces inwards thereby coupling with a horizontal cutter bar. the horizontal cutter bar is driven through the universal main shaft head, and is shown in Figures 1-3.
(2) A motive rotary power source, or motor, is mounted in the ram. Rotary power is transferred through a first coupling plane, between the ram and the auxiliary section, by means of a transmission shaft 401 mounted through the centre of rotation of the first coupling plane. This is sown in Figure 4. it replaces the conventional bevel gear assembly thereby reducing the cost and increasing the efficiency of the machine. This arrangement may also be applied to conventional vertical-to-horizontal ram-type or fixed head machines, except that these would not be capable of the 6-direction processing that the machine described above is capable of. The conventional machines which can be used are those having angled coupling planes and conventional transmission systems such as bevel gears or constant-speed universal joints and which have a transmission shaft 501 through the centre of the coupling plane between the ram and the output component as shown in Figure 5.

There is very significant economic and practical advantages to milling machines and other tooling machines according to this invention, particularly in the embodied structures mentioned above.

## Claims

1. A tooling machine comprising
a machine body (110),
a ram (101) mountable on the machine body (110) and movable back and forth for driving and adjustment, the ram including a ram coupling plane (102)
an auxiliary component (103) including a first coupling plane (104) engagable with the ram coupling plane (102), the auxiliary component (103) being co-axially rotatably adjustable with respect to the engaged ram coupling plane (102) and further including a second inter-output plane (105) disposed at 45° to the first coupling plane (104)
an output component (106) having an output coupling plane (107) engaable with the inter-output plane (105), the output component being rotatable between 0-360° about an axis perpendicular to the engaged output coupling plane (107) and inter-output plane (105) for adjustment/locking
an output shaft (108) disposed within the output component (106,)
characterised in that the coupling plane (102) of the ram (101) is inclined downwardly at 45° from vertical, permitting the second inter-output plane (105) to be adjustable and positionable facing forwards, downwards or at various angles therebetween, in that the output shaft (108) lies parallel to the output coupling plane (107) and is adjustable through 0-360°, in that the output shaft (108) includes an output shaft hole (109) for locking/locating cutting tools such as milling anvil, grinding, boring, and vertical cutters, in that the output shaft (108) is drivably positionable forwards, backwards, to the left, to the right, upwards, downwards and positions in between, in that a shaft support hole (111) is disposed in the machine body (110) beneath the ram (101) for supporting one end of a horizontal cutter bar (112), the other end of the cutter bar (112) locatable in and driven by the output shaft (108) of the inward facing output component (106), and in that the cutter bar (112) is additionally supportable by support bearings (114) wherein the cutter bar (112) is adjustable along guide rails (113) located below the ram (101).

2. A tooling machine according to claim 1 characterised by a universal main shaft head comprising
a ram (101) adjustable for longitudinal positioning forwards and backwards,
an auxiliary component (103) including a first coupling plane (104) for coupling with the coupling plane (102) of the ram and an inter-output coupling plane (105) at 45° to the first coupling plane (104)
a conventional universal main shaft head mounted on the inter-output coupling plane (105), and including an output shaft (108) which is open at each end,
wherein each of said couplings are rotatably adjustable for 0-360° positioning to allow output shaft adjustment in five directions upwards, downwards, forward, to the left and to the right and positions in between and a horizontal cutter bar (112) is connectable between the shaft support hole (111) in the machine body (110) and the output shaft (108).

3. A tooling machine according to claim 1 characterised by a rotary power source located at the ram (101) so that the rotary power is transmitted through the first coupling plane (104) of the auxiliary component (103) to the inter-out coupling plane (105) of the auxiliary component (103) by means of a transmission shaft through the centre of rotation of the first coupling plane (104) of the auxiliary component (103), thereby replacing a conventional bevel gear assembly.

4. A tooling machine according to claim 1 characterised by a conventional driving mechanism and by a powered or manual mechanism for universally adjusting and positioning the universal main shaft head comprising
a universal main shaft head which is adjustable to a horizontal position so that the output shaft (108) lines up with a shaft support hole (111) in the machine body (110) for mounting a horizontal cuter bar (112) between the conical main shaft hole and the shaft hole.

5. A tooling machine according to claim 1 characterised by a manual or mechanical adjustment mechanism and by a main shaft structure adjustable for positioning upwards, downwards, to the right, to the left, forwards and backwards in six directions and positions in between for block-free movement.

## Patentansprüche

1. Werkzeugmaschine mit
einem Maschinenchassis (110),
einem an das Maschinenchassis (110) montierbaren und für Antriebe- und Einstellswecke vor- und zurückbewegbaren Gegenhalter (101), wobei zu dem Gegenhalter eine Gegenhelterkopplungsebene (102) gehören,
einer Hilfskomponente (103), welche eine mit der Gegenhalterkopplungsebene (102) verbindbare erste Kopplungsebene (104) enthält, wobei die Hilfskomponente (103) bezüglich der verbundenen Gegenhalterungsebene (102) koaxial drehbar einstellbar ist und darüberhinaus eine zweite Zwischenabtriebsebene (105) besitzt, welche unter 45° zu der ersten Kopplungsebene (104) angeordnet ist,
einer Abtriebskomponente (106), welche eine mit der Zwischenabtriebsebene (105) verbindbare Abtriebskopplungsebene (107) aufweist, wobei die Abtriebekomponente zwischen 0-360° um eine zu der verbundenen Abtriebskopplungsebene (107) und Zwischenabtriebsebene (105) senkrechte Achse für Einstellung/Schließen drehbar ist, und mit
einer Abtriebswelle (108), welche innerhalb der Abtriebskomponente (106) angeordnet ist,
dadurch **gekennzeichnet**, daß die Kopplungsebene (102) des Gegenhalters (101) nach unten von der Vertikalen unter 45° geneigt ist, wodurch die zweite Zwischenabtriebsebene (105) nach vorn, nach unten oder in verschiedenen Zwischeninkeln weisend, einstellbar und positionierbar ist, daß die Abtriebswelle (108) parallel zu der Abtriebskopplungsebene (107) liegt und von 0-360° einstellbar ist, daß die Abtriebswelle (108) eine Abtriebswellenbohrung (109) zum Schließen/Fixieren von Bearbeitungswerkzeugen, wie Fräser, Schleifer, Bohrer und Vertikalschneider, enthalt, daß die Abtriebswelle (108) zum Antrieb nach vorne, nach hinten, nach links, nach rechts, nach oben, nach unten und in dazwischenliegenden Positionen einstellbar ist, daß eine Wellenlagerbohrung (111) im Maschinenchassis (110) unterhalb des Gegenhalters (101) zur Lagerung eines Endes einer horizontalen Werkzeugwelle (112) angeordnet ist, wobei für das andere Ende der Werkzeugwelle (112) eine Anordnung in der Abtriebswelle (108) der nach innen zeigenden Abtriebskomponente (106) und ein Antrieb durch diese Vorgegeben ist, und daß die Werkzeugwelle (112) zusätzlich durch Stützlager (114) lagerbar ist, wobei die Werkzeugwelle (112) entlang Führungsschienen (113) einstellbar ist, welche unterhalb des Gegenhalters (101) angeordnet sind.

2. Werkzeugmaschine nach Anspruch 1, dadurch **gekennzeichnet**, daß zu einem Universalhauptwellenkopf gehören:
ein Gegenhalter (101), welcher zur Längspositionierung nach vorne und hinten einstellbar ist,
eine Hilfskomponente (103), welche eine erste Kopplungeebene (104) zur Kopplung mit der Kopplungsebene (102) des Gegenhalters und eine mit 45° zu der ersten Kopplungsebene (104) geneigte Zwischenabtriebsebene (105) enthält, ein konventioneller Universalhauptwellenkopf, welcher an die Zwischenabtriebskoppelebene (105) montiert ist und eine Abtriebswelle (108) enthält, welche an beiden Enden offen ist, wobei jede der Kopplungen zur Abtriebswelleneinstellung in fünf Richtungen, nach oben, nach unten, nach vorn, nach links und nach rechts sowie Zwischenpositionen zwischen 0-360° drehbar einstellbar ist und eine horizontale Werkzeugwelle (112) zwischen der Wellenlagerbohrung (111) in dem Maschinenchassis (110) und der Abtriebswelle (108) anschließbar ist.

3. Werkzeugmaschine nach Anspruch 1, **gekennzeichnet** durch eine Drehantriebsquelle, die derart an dem Gegenhalter (101) angeordnet ist, daß die Drehkraft durch die erste Kopplungsebene (104) dar Hilfskomponente (103) auf die Zwischenabtriebsebene (105) der Hilfskomponente (103) mittels einer Übertragungswelle durch den Rotationsmittelpunkt dar ersten Kopplungsebene (104) der Hilfskomponente (103) übertragen wird, wobei eine konventionelle Kegelradanordnung ersetzt wird.

4. Werkzeugmaschine nach Anspruch 1, **gekennzeichnet** durch einen konventionellen Antriebsmechanismus und einen motorangetriebenen oder manuellen Mechanismus zur universellen Einstellung und Positionierung das Universalhauptwellenkopfes, welcher in eine Horizontalposition so einstellbar ist, daß die Abtriebswelle (108) mit der Wellenlagerbohrung (111) in dem Maschinenchassis (110) zur Montage einer horizontalen Werkzeugwelle (112) zwischen der konischen Hauptwellenbohrung und der Wellenbohrung fluchtat.

5. Werkzeugmaschine nach Anspruch 1, **gekennzeichnet** durch einen manuellan oder mechanischen Einstellmechanismus und eine Hauptwellenstruktur, welche zur Positionierung nach oben, nach unten, nach rechte, nach links, nach vorn und nach hinten in sechs Richtungen sowie Positionen dazwischen zur ungehinderten Bewegung einstellbar ist.

## Revendications

1. Machine-outil comprenant :
. un corps de machine (110) ;
. un mandrin (101) pouvant être monté sur le corps de machine (110) et mobile en avant et en arrière pour la conduite et l'ajustement, le mandrin présentant une surface de couplage de mandrin (102) ;
. un élément auxiliaire (103) présentant une première surface de couplage (104) pouvant venir en prise avec la surface de couplage (102) du mandrin, l'élément auxiliaire (103) étant réglable par rotation co-axiale par rapport à la surface de couplage de mandrin (102) avec laquelle elle est en prise, et présentant en outre une deuxième surface intermédiaire de sortie (105) disposée à 45° par rapport à la première surface de couplage (104) ;
. un élément terminal (106) présentant une surface de couplage de sortie (107) pouvant venir en prise avec la surface intermédiaire de sortie (105), l'élément terminal étant mobile en rotation entre 0° et 360° autour d'un axe perpendiculaire à la surface de couplage de sortie (107) et à la surface intermédiaire de sortie (105) lorsqu'elles sont en prise pour l'ajustement et le verrouillage ;
. un arbre de sortie (108) disposé à l'intérieur de l'élément terminal (106) ;
caractérisée en ce que la surface de couplage (102) du mandrin (101) est inclinée vers le bas selon un angle de 45° par rapport à la verticale, de manière à permettre à la deuxième surface intermédiaire de sortie (105) d'être ajustable et réglable en position face à l'avant, tournée vers le bas ou à différents angles entre ces deux positions, en ce que l'arbre de sortie (108) est disposé parallèlement à la surface de couplage de sortie (107) et est réglable entre 0° et 360°, en ce que l'arbre de sortie (108) comprend un orifice (109) pour le verrouillage et/ou le montage d'outils de coupe tels qu'une enclume de fraisage, des couteaux de meulage, de perçage et de découpe verticale, en ce que l'arbre de sortie (108) peut être mis en position en fonctionnement vers l'avant, vers l'arrière, vers la gauche, vers la droite, vers le haut, vers le bas, ainsi que dans les positions intermédiaires, en ce qu'un orifice de support d'arbre (111) est disposé dans le corps de machine (110) au-dessous du mandrin (101) de façon à porter une extrémité d'une barre de coupe horizontale (112), l'autre extrémité de la barre de coupe (112) étant disposée dans et entraînée par l'arbre de sortie (108) de l'élément terminal orienté face à l'intérieur (106), et en ce que la barre de coupe (112) est en outre supportée par des paliers porteurs (114) dans lesquels la barre de coupe (112) est réglable le long de rails de guidage (113) situés sous le mandrin (101).

2. Machine-outil selon la revendication 1, caractérisée en ce qu'une tête universelle d'arbre principal comprend :
. un mandrin (101) réglable en position longitudinale vers l'avant et vers l'arrière ;
. un élément auxiliaire (103) comprenant une première surface de couplage (104) pour le couplage avec la surface de couplage (102) du mandrin et une surface de couplage intermédiaire de sortie (105) disposée à 45° par rapport à la première surface de couplage (104) ;
. une tête universelle d'arbre principal conventionnelle montée sur la surface de couplage intermédiaire de sortie (105) et comprenant un arbre de sortie (108) qui est ouvert à chacune de ses extrémités ;
chacun des couplages étant réglable en position par rotation entre 0° et 360° pour permettre un ajustement de l'arbre de sortie dans cinq directions vers le haut, vers le bas, vers l'avant, vers la gauche et vers la droite, ainsi que dans les positions intermédiaires, et une barre de coupe (112) horizontale pouvant être connectée entre l'orifice de support d'arbre (111) dans le corps de machine (110) et l'arbre de sortie (108).

3. Machine-outil selon la revendication 1, caractérisée en ce qu'une source d'énergie rotative est située au niveau du mandrin (101) de telle façon que l'énergie rotative est transmise à travers la première surface de couplage (104) de l'élément auxiliaire (103) à la surface de couplage intermédiaire de sortie (105) de l'élément auxiliaire (103) au moyen d'un arbre de transmission passant à travers le centre de rotation de la première surface de couplage (104) de l'élément auxiliaire (103), de façon à remplacer un mécanisme conventionnel à engrenage conique.

4. Machine-outil selon la revendication 1, caractérisée en ce qu'un mécanisme de commande conventionnel et un mécanisme motorisé ou manuel pour l'ajustement et le positionnement universel de la tête universelle d'arbre principal comprennent :
. une tête universelle d'arbre principal réglable dans une position horizontale de telle sorte que l'arbre de sortie (108) s'aligne avec un orifice de support d'arbre (111) dans le corps de machine (110) pour le montage d'une barre de coupe (112) horizontale entre l'orifice conique de l'arbre principal et l'orifice de support d'arbre.

5. Machine-outil selon la revendication 1, caractérisée en ce qu'elle comprend un mécanisme de réglage manuel ou mécanique et un dispositif d'arbre principal réglable en position vers le haut, vers le bas, vers la droite, vers la gauche, vers l'avant et vers l'arrière dans six directions, ainsi que dans les positions intermédiaires, permettant un mouvement sans blocage.
